# EUROPÄISCHE PATENTSCHRIFT

(11) **EP 2 479 859 B1**
(45) Veröffentlichungstag und Bekanntmachung des Hinweises auf die Patenterteilung: **16.03.2016**
(21) Anmeldenummer: 11194706.5
(22) Anmeldetag: 20.12.2011
(51) Int. Cl.: H02H 9/04

(54) **Sicherheitsschaltung**
Safety circuit
Dispositif de commutation de sécurité

(30) Priorität: 20.12.2010 DE 202010016830 U
(43) Veröffentlichungstag der Anmeldung: 25.07.2012
(73) Patentinhaber: Robert Bosch GmbH, 70442 Stuttgart (DE)
(72) Erfinder: Stier Sven H., 64572 Büttelborn (DE)

(56) Entgegenhaltungen:
- DE-A1- 3 531 079
- DE-A1-102008 041 099
- US-A1- 2006 034 031

## Beschreibung

Die vorliegende Erfindung betrifft eine Sicherheitsschaltung zum Schützen elektronischer Bauelemente vor Überspannung. Weiterhin betrifft die vorliegende Erfindung eine Schaltungsanordnung mit einer Sicherheitsschaltung sowie eine Photovoltaikanlage mit einer Sicherheitsschaltung und sie betrifft eine Schutzbeschaltung. Außerdem betrifft die vorliegende Erfindung ein Verfahren zum Betreiben eines Wechselrichters.

Wechselrichter wie beispielsweise Wechselrichter zum Einspeisen elektrischer Energie einer Photovoltaikanlage in ein Stromnetz sind häufig ausgangsseitig mit Ausgangsdrosseln und Filterkondensatoren beschaltet, um einen ersten Wechselstrom mit einer ersten Wechselspannung zu erzeugen. Der Wechselstrom kann einphasig sein, ist üblicherweise aber dreiphasig ausgeführt, insbesondere bei größeren Anlagen. Dieser erste Wechselstrom wird mittels eines Transformators mit einem lokalen 400 V Stromnetz- das auch einfach als Netz oder als Netzwerk bezeichnet werden kann - gekoppelt. An ein solches lokales Stromnetz können auch weitere Wechselrichter, insbesondere weitere Solargeneratoren, bzw. Photovoltaikzellen mit Wechselrichter und entsprechenden Transformatoren angeschlossen sein. Das lokale Stromnetzt ist dann über entsprechende Transformatoren, die hier Mittelspannungstransformatoren genannt werden, an ein Mittelspannungsnetz angeschlossen.

Erfolgt eine plötzliche Trennung des lokalen Stromnetzes vom Mittelspannungsnetz, so kann der Strom in dem lokalen Stromnetz und/oder der von dem Wechselrichter erzeugte Strom nicht abgeführt werden und es kommt zu einer Spannungserhöhung. Glättungsdrosseln und Streuinduktivitäten des Wechselrichters führen zu diesem Zeitpunkt noch den vollen Strom. Induktivitäten sind bestrebt, den Stromfluss aufrecht zu erhalten. Bei einem solchen Trennen vom Mittelspannungsnetz und entsprechend einem ruckartigen Öffnen eines Mittelspannungsschalters kann der Strom somit nicht mehr ins Netz fließen und die Spannung des hierdurch entstandenen Inselnetzes wird stark erhöht werden. Diese Erhöhung kann ein Vielfaches des Nennwertes betragen. Diese hohe Spannung liegt auch an den netzseitigen Filterkondensatoren an und kann diese zerstören. Zudem verursacht die hohe Spannung einen sehr großen Strom durch netzseitige Dioden in den Zwischenkreis des Wechselrichters, der hierdurch aufgeladen wird.

DE 35 31 079 A1offenbart eine Schaltungsanordnung zum automatischen Überlastungsschutz von Stromwandlern. Beim unzulässigen Anstieg der an sekundären Klemmen eines Stromwandlers messbaren Spannung werden die Klemmen automatisch kurzgeschlossen und beim Abfall der Spannung wieder geöffnet.

US 2006/0034031 A1 offenbart einen automatischen Überlastungsschutz für eine elektrische Schaltung.

DE 35 31 079 A1 offenbart eine Vorrichtung zum Schutz elektronischer Bauelemente gegen Überspannungen einer Versorgungsspannung. Zunächst wird detektiert, ob die Versorgungsspannung einen Aktivierungsschwellwert überschreitet, der oberhalb eines Normalbetriebsbereichs der Versorgungsspannung liegt. In einem weiteren Schritt wird eine Spannungsbegrenzungseinrichtung aktiviert, die die Versorgungsspannung auf einen Begrenzungswert begrenzt, der innerhalb des Normalbetriebsbereichs liegt. Die Spannungsbegrenzungseinrichtung wird nach Ablauf eines vorgebbaren Aktivierungsintervalls wieder desaktiviert.

Aufgabe der vorliegenden Erfindung war es somit, die beschriebenen Probleme oder zumindest einige davon zu verhindern oder zu verringern. Insbesondere soll eine Lösung gefunden werden, bei der bei der beschriebenen plötzlichen Trennung vom Mittelspannungsnetz ein Zerstören von Bauelementen durch Überspannungen vermieden wird. Zumindest soll eine alternative Ausführungsform vorgeschlagen werden.

Erfindungsgemäß wird eine Sicherheitsschaltung nach Anspruch 1 vorgeschlagen. Diese Sicherheitsschaltung umfasst einen Transformator mit einem Eingang und einem Ausgang, wobei der Eingang die Primärseite und der Ausgang die Sekundärseite des Transformators bilden kann. Bestimmungsgemäß wird der Eingang dieses Transformators mit einem Wechselrichter verbunden, der einen ersten Wechselstrom mit einer ersten Wechselspannung erzeugt. Dies erfolgt üblicherweise durch ein gepulstes Signal, das über Glättungsdrosseln geführt wird. Ein so erzeugter Wechselstrom mit einer ersten Wechselspannung liegt am Eingang des Transformators an und wird in einen zweiten Wechselstrom mit einer zweiten Wechselspannung am Ausgang des Transformators transformiert. Am Ausgang des Transformators ist bestimmungsgemäß ein lokales Stromnetz angeschlossen. Dieses lokale Stromnetz stellt zumindest eine Verbindung des Ausgangs dieses Transformators zu einem Mittelspannungsnetz oder einem anderen Netz her, insbesondere zu einem Mittelspannungstransformator. Das lokale Stromnetz kann sich hierauf beschränken und im einfachsten Fall lediglich als Leitung ausgeführt sein, oder es können weitere Wechselrichter mit weiteren Transformatoren verbunden sein und/oder es können Verbraucher an dieses lokale Stromnetz angeschlossen sein.

Um nun im Falle einer plötzlichen Trennung vom Mittelspannungsnetz eine Überspannung zu vermeiden, ist eine Kurzschlussschaltung, die auch als Schutzbeschaltung bezeichnet werden kann, zum Erzeugen eines vorübergehenden Kurzschlusses in dem lokalen Stromnetz vorgesehen. Diese Kurzschlussschaltung erzeugt einen vorübergehenden Kurzschluss in dem lokalen Stromnetz, wenn die zweite Wechselspannung einen vorbestimmten Wert überschreitet. Dies kann beispielsweise 20% oder 50% des Nennwertes der zweiten Wechselspannung sein. Es kann auch ein anderer Wert wie beispielsweise ein Wert von 20% bis 50% des Nennwertes der zweiten Wechselspannung oder ein anderer Wert gewählt werden. Eine Spannungserhöhung, die hierdurch detektiert wird, stellt sich bei einer plötzlichen Trennung des lokalen Stromnetzes vom Mittelspannungsnetz, oder anderem Netz ein. Entsprechend wird der vorbestimmte Wert, um den die zweite Wechselspannung überschritten werden muss, um den Kurzschluss auszulösen, so gewählt, dass hierdurch eine Trennung vom Mittelspannungsnetz sicher detektiert wird. Die Überprüfung einer Überspannung bezieht sich auf einen Spannungsbetrag. Es kann hierfür auch die erste Spannung gemessen und als auslösendes Kriterium verwendet werden. Auch kann eine Ausführung ohne Transformator vorgesehen sein. Die erste und die zweite Spannung wären dann gleich und könnten verallgemeinernd als Netzwechselspannung bezeichnet werden. Bei Verwendung eines Transformators entspricht die Netzwechselspannung der zweiten Spannung.

Die Kurschlussschaltung schließt somit das lokale Stromnetz, das an den Transformator angeschlossen ist, kurz, insbesondere werden bei dreiphasigen Stromnetzen die Phasen gegeneinander kurzgeschlossen. Vorzugsweise ist dabei diese Kurzschlussschaltung in der Nähe des Ausgangs des Transformators oder unmittelbar am Ausgang des Transformators funktional angeordnet.

Durch das Kurzschließen erfolgt somit zunächst ein Kanalisieren des Stroms, um die Überspannung zu verhindern. Dabei kann eine Überspannung, wenn sie nicht vermieden wird, leicht den dreifachen Wert der Nennspannung betragen. Die Energie, die aufgrund der abrupten Trennung nicht mehr ins Mittelspannungsnetz abgeführt werden kann, wird dadurch in dem lokalen Stromnetz und ggf. teilweise in damit verbundenen Elementen umgesetzt. Das lokale Stromnetz, das bei der Trennung vom Mittelspannungsnetz plötzlich ein Inselnetz bildet, kann dabei durch seine Impedanz den Strom begrenzen, was auch zu dieser Verteilung der Energie führen kann.

Vorzugsweise weist die Kurzschlussschaltung wenigstens einen steuerbaren Halbleiterschalter auf. Hierdurch ist ein schnelles und elektronisch gesteuertes Schalten möglich. Dies können bspw. GTOs, IGBTs und IGCTs sein.

Vorzugsweise werden zum Kurzschließen Thyristoren verwendet. Thyristoren sind kurzzeitig kurzschlussfest, robust, vergleichsweise kostengünstig und können mit verhältnismäßig einfachen Ansteuerschaltungen betrieben werden. Der Kurzschluss im lokalen Stromnetz, also effektiv beim Ausgang des Transformators, soll nur vorübergehend, insbesondere sehr kurz erfolgen. Thermische Probleme stellen bei einer kurzen Kurzschlussbelastung somit kein Problem dar. Vorzugsweise werden die Halbleiterschalter bzw. die Thyristoren antiparallel geschaltet. D. h. zwei Halbleiterschalter werden parallel geschaltet aber mit unterschiedlicher Durchlassrichtung. Hierdurch wird der Tatsache Rechnung getragen, dass sich die Vorzeichen der Spannung in einem Wechselspannungsnetz ständig ändern und auch bei einem Kurzschluss sich die Stromrichtung des Kurzschlusses ständig ändern kann und durch das antiparallele Schalten der Halbleiterschalter, insbesondere der Thyristoren, kann für jede Stromrichtung ein Halbleiterschalter vorgesehen sein. Ist ein solcher Kurzschluss aufgetreten, können die Halbleiterschalter, insbesondere Thyristoren, sich wieder abkühlen und für einen weiteren Kurzschluss wieder verwendet werden. Vorzugsweise sind die Thyristoren für einen Kurzschluss mit einer Kurzschlussdauer von 3 Netzperioden ausgelegt.

Die zugrunde gelegte Topologie bzw. Schaltungsanordnung und somit auch das lokale Stromnetz betreffen eine mehrphasige, insbesondere dreiphasige Ausführung. Ein Kurzschluss erfolgt hierbei jeweils zwischen den Phasen. Mit anderen Worten, wird ein Leiter-Leiter-Kurzschluss jeweils vorgenommen.

Günstig ist es, einen Kurzschluss nur sehr kurz durchzuführen, nämlich nur für eine vorbestimmte Anzahl von Perioden des Wechselstroms des lokalen Stromnetzes. Vorzugsweise erfolgt ein Kurzschluss nur für ein bis fünf Netzperioden, also Perioden des Wechselstroms, insbesondere erfolgt der Kurzschluss nur für ein bis drei Perioden. Hiernach wird der Kurzschlusszustand wieder beendet. Entsprechend kann die Sicherheitsschaltung dazu vorbereitet sein und eine solche Vorbereitung ist durch eine Vorprogrammierung entsprechender Steuereinheiten möglich. Ggf. kann ein Beenden des Kurzschlusses auch über Schaltungsmaßnahmen wie analoge Lösungen ausgelöst werden. Eine analoge Realisierung könnte beispielsweise durch das Vorsehen einer thermischen Zeitkonstante erreicht werden, um nur ein Beispiel zu nennen.

Gemäß der Erfindung ist ein Unterbrechungsschaltmittel zwischen dem Ausgangstransformator und der Kurzschlussschaltung vorgesehen, um das lokale Stromnetz vom Transformator zu trennen. Günstig ist es zudem, eine Steuereinheit zum Steuern der Kurzschlussschaltung und außerdem oder alternativ zum Steuern des Unterbrechungsschaltmittels vorzusehen. Gemäß einer Ausführungsform wird vorgeschlagen, die Sicherheitsschaltung bzw. die Steuereinheit so vorzubereiten, dass nach dem Erzeugen des Kurzschlusses das Unterbrechungsschaltmittel zum Trennen des lokalen Stromnetzes geöffnet wird und anschließend, bei geöffnetem Unterbrechungsschaltmittel, das Erzeugen des Kurzschlusses, also der Kurzschluss, beendet wird. Hierdurch wird eine Lösung vorgeschlagen, bei der beim Trennen des lokalen Stromnetzes vom Mittelspannungsnetz eine Spannungserhöhung auftritt, die Kurzschlussschaltung diese detektiert und einen Kurzschluss ausführt, der eine weitere Spannungserhöhung verhindert. Nun wird der Ausgang des Transformators und damit im Ergebnis der mit dem Transformator gekoppelte Wechselrichter vom lokalen Stromnetz getrennt. Es erfolgt somit eine Trennung, wobei die bisher bekannten Überspannungen vermieden werden. Unmittelbar nach der Trennung wird der Kurzschlusszustand wieder aufgehoben. Hierdurch wird eine Überlastung der Kurzschlussschaltung, insbesondere der Halbleiterschalter wie der Thyristoren, vermieden. Zudem ist das Ziel des Kurzschlusses erreicht. Bei Verwendung von Thyristoren kann zum Beenden des Kurzschlusses deren Ansteuerung aufgehoben werden. Am Ende einer entsprechenden Netzperiode verlöscht der jeweilige Thyristor dann selbständig.

Weiterhin wird ein Wechselrichter mit einer Sicherheitsschaltung vorgeschlagen. Der Wechselrichter ist mit dem Eingang des Transformators funktional verbunden und der Wechselrichter kann zusammen mit dem Transformator und der Kurzschlussschaltung als kompakte Lösung angeboten werden. Auch eine Dimensionierung der Elemente kann auf einfache Weise aneinander angepasst werden.

Bevorzugt wird ein Wechselrichter vorgeschlagen zum Erzeugen einer Ausgangswechselspannung an einem Ausgang des Wechselrichters zum Bereitstellen eines elektrischen Wechselstroms in einem lokalen Stromnetz mit einer Netzwechselspannung, mit einer Kurzschlussschaltung zum Erzeugen eines vorübergehenden Kurzschlusses in dem lokalen Stromnetz wenn die Netzwechselspannung einen vorbestimmten Wert überschreitet. Ein solcher Wechselrichter weist somit eine Kurzschlussschaltung auf, die direkt an dem Ausgang des Wechselrichters angeschlossen sein kann, ohne dass ein Transformator vorgesehen sein muss. Hierdurch kann ein Wechselrichter mit Kurzschlussschaltung kombiniert werden. Bei Bedarf kann ein Transformator angeschlossen werden, insbesondere so, dass die Kurzschlussschaltung zwischen Wechselrichterausgang und Transformator angeordnet ist.

Günstig ist es zudem, am Ausgang des Wechselrichters eine Filterschaltung mit Filterkondensatoren zum Filtern der Ausgangswechselspannung vorzusehen. Ein zusätzlicher Schutz der Filterkondensatoren durch parallel geschaltete Varistoren kann vorgesehen sein. Die primäre Verhinderung von Überspannungen an elektronischen Bauelementen wie den Filterkondensatoren ist durch die beschriebene Kurzschlussschaltung vorzusehen. Das Parallelschalten von Varistoren parallel zu den Filterkondensatoren, also insbesondere jeweils ein Varistor parallel zu einem Filterkondensator, kann als zusätzliche Sicherheit eingerichtet werden, um den Schutz durch die Kurzschlussschaltung zu ergänzen.

Zudem wird eine Schaltungsanordnung vorgeschlagen, die wenigstens einen Wechselrichter, einen Transformator und ein damit verbundenes lokales Stromnetz umfasst. An dem Stromnetz und funktional am Ausgang des Transformators ist die Kurzschlussschaltung vorgesehen. Hierdurch kann ein Gesamtkonzept für die Schaltungsanordnung geschaffen werden. Die Schaltungsanordnung weist somit insbesondere eine Sicherheitsschaltung nach einer der beschriebenen Ausführungsformen oder einen Wechselrichter gemäß einer der beschriebenen Ausführungsformen auf. Es kann auch auf den Transformator verzichtet werden, so dass die Kurzschlussschaltung mit dem Wechselrichter ohne Zwischenschaltung eines Transformators verbunden ist.

Gemäß einer bevorzugten Ausgestaltung wird zudem vorgeschlagen, dass eine Schaltungsanordnung wenigstens einen weiteren Transformator gekoppelt mit einem weiteren Wechselrichter aufweist. Hierdurch wird ein erweitertes System geschaffen. Die Auslegung und Berücksichtigung eines Kurzschlussstroms im Falle einer plötzlichen Trennung vom Mittelspannungsnetz kann hierbei eine gemeinsame Berücksichtigung finden. Eine Kopplung mehrerer Wechselrichter, also bspw. zweier Wechselrichter oder weiterer, kann auch jeweils ohne einen mit dem jeweiligen Wechselrichter gekoppelten Transformator vorgesehen sein.

Eine Ankopplung des lokalen Stromnetzes über einen Mittelspannungstransformator mit einem Mittelspannungsnetz ist bevorzugt vorzusehen. Hierüber können ein Wechselrichter oder mehrere Wechselrichter in das Mittelspannungsnetz einspeisen. Ebenso kann eine Ankopplung des lokalen Stromnetzes mit einem Hochspannungsnetz vorgesehen sein, bevorzugt über einen Hochspannungstransformator.

Zudem wird eine Photovoltaikanlage mit einem Wechselrichter und einer Sicherheitsschaltung gemäß einer der beschriebenen Ausführungsformen vorgeschlagen, insbesondere zusammen mit einer Schaltungsanordnung der beschriebenen Ausführungsformen. Hierdurch lassen sich Photovoltaikanlagen, also Photovoltaikpanels oder -zellen, die allgemein als Solargeneratoren bezeichnet werden, zusammen mit Wechselrichtern zum Einspeisen in ein elektrisches Netzwerk, nämlich insbesondere in ein elektrisches Mittelspannungsnetzwerk, realisieren, die gegen Überspannungsschäden durch plötzliches Trennen vom Mittelspannungsnetz geschützt sind.

Es wird somit vorgeschlagen, einen Wechselrichter, insbesondere einen Wechselrichter einer Photovoltaikanlage, so zu betreiben, dass eine Netzspannung an einem mit dem Wechselrichter verbundenen lokalen Stromnetz gemessen wird und das lokale Stromnetz kurzgeschlossen wird, wenn die Netzspannung einen vorbestimmten Wert überschreitet oder wenn eine Verbindung zu einem angeschlossenen Mittelspannungsnetz unterbrochen wird. Mit anderen Worten kann auch versucht werden, beispielsweise über entsprechende Erfassungsmittel wie bspw. Messmittel an einem entsprechenden Trennglied, eine Unterbrechung zum angeschlossenen Mittelspannungsnetz zu erfassen und dadurch das beschriebene Kurzschließen auszulösen.

Nachfolgend wird die Erfindung beispielhaft anhand von Ausführungsformen unter Bezugnahme auf die begleitenden Zeichnungen näher erläutert.
- Fig. 1: zeigt schematisch die Anbindung mehrerer Solaranlagen mit Wechselrichter an ein Mittelspannungsnetz.
- Fig. 2: zeigt schematisch einen Wechselrichter mit ausgangsseitig angeschlossenem Transformator und Sicherheitsschaltung.
- Fig. 3: zeigt schematisch die Anbindung eines Wechselrichters mit Sicherheitsschaltung an ein Mittelspannungsnetz.

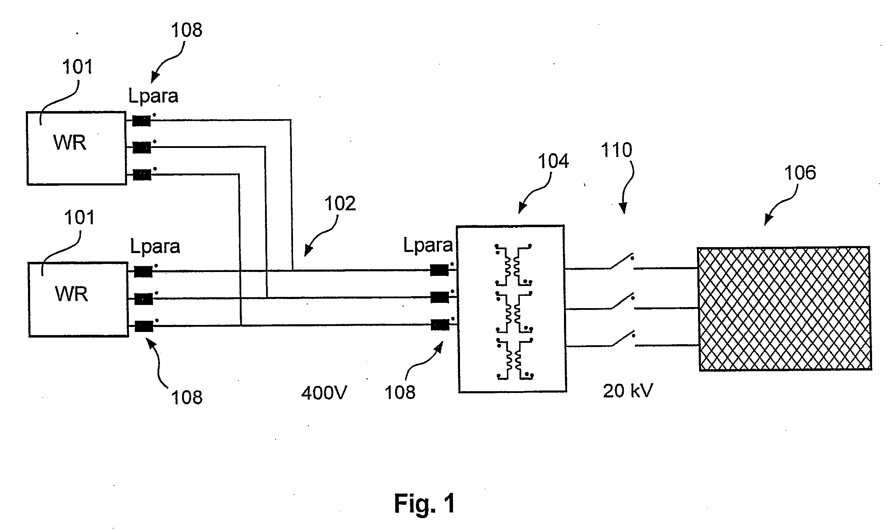

Gemäß Fig. 1 sind zwei Wechselrichter 101 über ein lokales Stromnetz 102 bzw. Netzwerk 102, mit einem Mittelspannungstransformator 104 verbunden und darüber an ein Mittelspannungsnetz 106 angekoppelt. Die Wechselrichter 101 stehen in dieser schematischen Darstellung der Fig. 1 repräsentativ für Energiequellen, die einen dreiphasigen Strom in das lokale Stromnetz 102 einspeisen. Eine solche Energiequelle kann ein Solargenerator mit einem angekoppelten Wechselrichter sein, der den von dem Solargenerator erzeugten Gleichstrom in entsprechenden dreiphasigen Wechselstrom wandelt. Der Wechselrichter 101 kann dabei auch Ausgangsdrosseln mit umfassen.

In dem lokalen Stromnetz 102 sind zudem parasitäre Leitungsinduktivitäten 108 eingezeichnet. Obwohl immer das Bezugszeichen 108 für die parasitären Induktivitäten verwendet wird, versteht es sich von selbst, dass diese unterschiedliche Werte aufweisen können. Das lokale Stromnetz 102 weist in Betrieb eine Spannung von 400 Volt auf, also eine Leiter-Leiter-Spannung mit einem Effektivwert von 400 V. Die Spannung des Mittelspannungsnetzes 106 beträgt 20 kV. Der Mittelspannungstransformator 104 führt somit eine Spannungstransformation von 400 V auf 20 kV durch.

Am Ausgang des Mittelspannungstransformators 104, also an seiner zum Mittelspannungsnetz 106 weisenden Sekundärseite, sind zudem Trennschalter 110 vorgesehen. Diese Trennschalter 110 sind dafür vorgesehen, eine Trennung vom Mittelspannungsnetz 106 vorzunehmen. Diese Trennung kann beispielsweise in einem Fehlerfall in einem Mittelspannungsnetz 106 oder auch bei einer unerwünschten Spannungsschwankung des lokalen Stromnetzes 102 vorgesehen sein. Eine durch den Trennschalter 110 durchgeführte Trennung erfolgt abrupt und führt dazu, dass der in dem Moment im lokalen Stromnetz 102 vorhandene Strom vom Mittelspannungsnetz 106 nicht abgenommen wird. Entsprechend entstehen Spannungsüberhöhungen, die bis an die Ausgänge der Wechselrichter 101 zurückführen und in diesen Wechselrichtern 101 zu Schäden führen können.

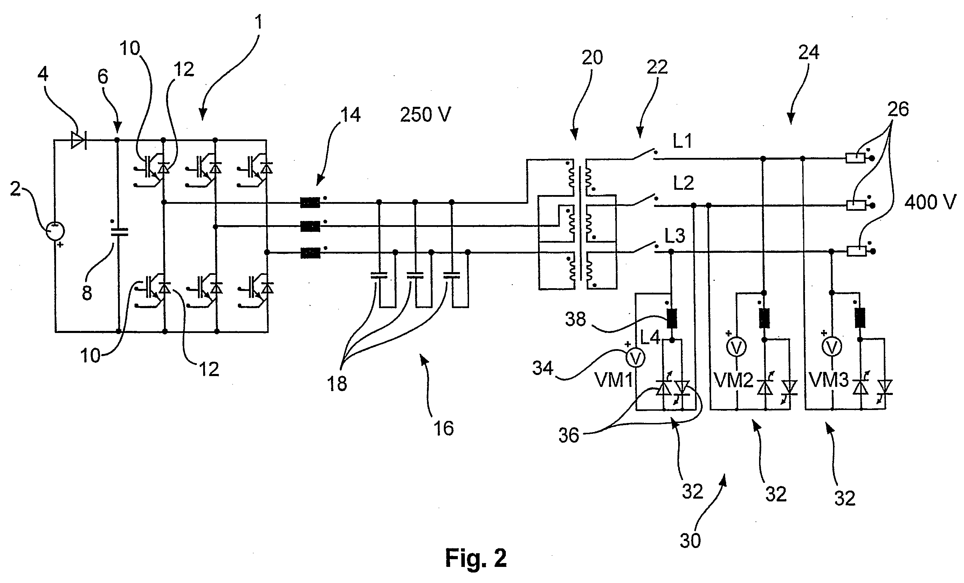

Fig. 2 zeigt einen Wechselrichter 1 mit einer Stromquelle 2, die einen Gleichstrom erzeugt und beispielsweise durch einen Solargenerator, also Photovoltaikzellen, gebildet sein kann. Von der Stromquelle 2 erzeugter Strom wird über eine Eingangsdiode 4 in einen Gleichspannungszwischenkreis 6 geführt. Der Gleichspannungszwischenkreis ist durch einen Zwischenkreiskondensator 8 gekennzeichnet, der als Energiespeicher fungiert und gleichzeitig eine gewisse Glättungswirkung aufweist. Ein Entladen des Zwischenkreiskondensators 8 wird durch die Eingangsdiode 4 verhindert. Das Wechselrichten wird mittels sechs Halbleiterschaltern 10 durchgeführt, zu denen jeweils eine Freilaufdiode bzw. Rückspeisediode 12 parallel geschaltet ist. Die gezeigten sechs Halbleiterschalter 10 mit den sechs Rückspeisedioden 12 bilden einen im Grunde bekannten Aufbau. Am Ausgang des Wechselrichters 1 sind Ausgangsdrosseln 14 angeschlossen. Außerdem ist ein Ausgangsfilter 16 vorgesehen, der drei Filterkondensatoren 18 aufweist.

Die Ausgangsspannung, die sich im Bereich des Ausgangsfilters 16 einstellt, beträgt etwa 250 V und bildet gleichzeitig den Eingang eines Niederspannungstransformators 20, der die 250 V auf 400 V transformiert. Die Ausgangsseite des Niederspannungstransformators 20 ist dabei über ein Unterbrechungsschaltmittel 22 mit einem lokalen Stromnetz 24 verbunden, das somit einen dreiphasigen Strom mit einer Spannung von 400 V führt. Das Unterbrechungsschaltmittel 22 weist für je eine Phase ein Schaltmittel, also einen Schalter auf. An dem lokalen Stromnetz 24 sind drei Leitungsimpedanzen 26 dargestellt, die im Grunde das passive elektrische Verhalten des lokalen Stromnetzes 24 charakterisieren. An das lokale Stromnetz 24 können weitere Stromquellen angeschlossen sein, wie das in Fig. 1 veranschaulicht ist. Zusätzlich zu den Quellen und zusätzlich zu den gezeigten Figuren können auch Verbraucher an das lokale Stromnetz 24 - bzw. das lokale Stromnetz 106 gemäß Fig. 1 - angeschlossen sein. Die weiteren angeschlossenen Elemente einschließlich der entsprechenden Verbindungsleitungen haben Einfluss auf die Eigenschaft des lokalen Stromnetzes 24 bzw. 106.

Das lokale Stromnetz 24 ist bestimmungsgemäß mit einem Mittelspannungsnetz verbunden, in das der erzeugte Strom - zumindest ein Teil davon - eingespeist wird. Erfolgt eine abrupte Trennung des lokalen Stromnetzes 24 von diesem Mittelspannungsnetz, so kann der Strom, den letztlich der Wechselrichter 1 erzeugt hat, nicht eingespeist werden und führt zu einer Spannungserhöhung, die den dreifachen Nennwert der jeweiligen Spannung annehmen kann. In diesem Fall ist das Unterbrechungsschaltmittel 22 zunächst geschlossen. Die beschriebenen Überspannungen können am Niederspannungstransformator 20, an dem Ausgangsfilter 16, den Ausgangsdrosseln 14, den Rückspeisedioden 12, den Halbleiterschaltern 10 und dem Gleichspannungszwischenkreis 6 auftreten. Besonders problematisch sind diese Spannungsüberhöhungen an den Filterkondensatoren 18 des Ausgangsfilters 16 und den Rückspeisedioden 12 des Wechselrichters 1.

Um diese Spannungsüberhöhung zu vermeiden oder zumindest zu verringern, ist eine Kurzschlussschaltung 30 vorgesehen. Diese Kurzschlussschaltung 30 ist mit dem lokalen Stromnetz 24 verschaltet und dazu vorbereitet, im Falle einer auftretenden Überspannung einen Kurzschluss zwischen den Phasen des lokalen Stromnetzes 24 vorzunehmen. Dafür ist zwischen jeder Phase des lokalen Stromnetzes 24 eine entsprechende Kurzschlussteilschaltung 32 vorgesehen.

Jede Kurzschlussteilschaltung 32 weist eine Messvorrichtung 34 auf, die die Leiter-Leiter-Spannung jeweils zwischen zwei Phasen erfasst. Zum Kurzschließen sind jeweils zwei antiparallel geschaltete Thyristoren 36 vorgesehen, die somit einen Kurzschluss zwischen den beiden Leitern in beide Richtungen erzeugen können. In Reihe mit den beiden Thyristoren 36 ist eine Hilfsinduktivität bzw. Hilfsdrossel 38 geschaltet, die einen Stromanstieg begrenzt, nämlich das di/dt begrenzt. Hierdurch wird ein Schutz der Thyristoren erreicht. Günstige Werte für die zu verwendenden Induktivitäten liegen bei 2µH -10µH die dem zu steilen Ansteigen des Stroms entgegenwirken, so dass die vom Bauelementehersteller maximal zulässigen Stromsteilheiten nicht überschritten werden können.

Das Auslösen der Thyristoren 36 kann abhängig von der durch die Messvorrichtung 34 erfassten Spannung erfolgen. Die Messvorrichtung 34 kann zur unmittelbaren Ansteuerung der Thyristoren 36 der jeweiligen Kurzschlussteilschaltung 32 eingesetzt werden, oder es erfolgt eine zentrale Steuerung und damit zentrale Koordinierung der einzelnen Kurzschlussteilschaltungen 32 der Kurzschlussschaltung 30 insgesamt. Eine solche, in Fig. 2 nicht illustrierte übergreifende Steuerung, kann für ein gleichzeitiges Kurzschließen aller drei Phasen des lokalen Stromnetzes 24 eingesetzt werden. Zusätzlich wird vorgeschlagen, nach einem Kurzschluss zudem das Unterbrechungsschaltmittel 22 zu schalten, nämlich für alle drei Phasen zu öffnen. Schließlich ist eine solche übergeordnete Steuerung dazu eingerichtet, nach dem Öffnen des Unterbrechungsschaltmittels 22 das Kurzschließen mittels sämtlicher Kurzschlusstellschältungen 32 zu beenden. Dies kann erfolgen, indem die Thyristoren 36 nicht mehr angesteuert werden und dann selbständig verlöschen, wenn der Strom auf Null fällt oder seine Richtung wechselt.

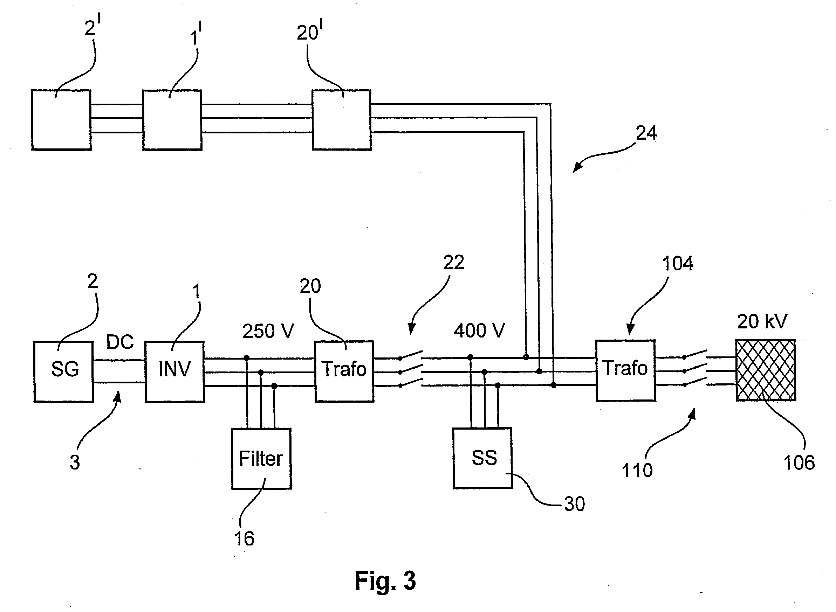

Fig. 3 zeigt eine Gesamtübersicht der Anbindung eines Solargenerators 2 als beispielhafte Energiequelle bis zu einem Mittelspannungsnetz 40, das beispielhaft eine Spannung von 20 kV aufweist. Die Bezugszeichen der Fig. 3 entsprechen teilweise denen der Fig. 1 und der Fig. 2, obwohl die jeweiligen Elemente nicht identisch sein müssen. Der Solargenerator 2 ist demnach über eine Gleichspannungsverbindung 3 mit einem Wechselrichter 1, der auch als Inverter bezeichnet werden kann, verbunden. Der Wechselrichter 1 erzeugt eine Wechselspannung mit etwa 250 V und an seinem Ausgang ist ein Ausgangsfilter 16 vorgesehen. Die 250 V bilden die Eingangsspannung für den Niederspannungstransformator 20, an dessen Ausgang 400 V ausgegeben werden. Zum Verhindern von Überspannungen ist als Schutzbeschaltung eine Kurzschlussschaltung 30 vorgesehen. Außerdem ist am Ausgang des Niederspannungstransformators 20 das Unterbrechungsschaltmittel 22 verschaltet. Die 400 V des Ausgangs des Niederspannungstransformators 20 werden somit in einem lokalen Stromnetz 24 geführt und an den Eingang eines Mittelspannungstransformators 104 angelegt. Der Mittelspannungstransformator 104 transformiert die 400 V an seinem Eingang auf 20 kV des Mittelspannungsnetzes 106. Zum Abtrennen des Mittelspannungstransformators 104 vom Mittelspannungsnetz 106 ist ein Trennschalter 110 vorgesehen. Insbesondere ein plötzliches Öffnen dieses Schalters 110 kann zu den beschriebenen Spannungsüberhöhungen führen, die durch die vorgesehene Kurzschlussschaltung 30 verhindert oder zumindest verringert werden sollen.

Zur Veranschaulichung ist in der Übersichtsdarstellung der Fig. 3 ein Transformator 20', Wechselrichter 1' und Solargenerator 2' repräsentativ für weitere und/oder andere mit dem lokalen Stromnetz 24 verbundene Stromquellen dargestellt. Hierdurch kann das lokale Stromnetz 24 gebildet werden. Das lokale Stromnetz 24 kann aber auch lediglich aus einer Verbindung vom Niederspannungstransformator 20 zum Mittelspannungstransformator 104 gebildet werden.

Figur 3 zeigt ein Beispiel einer Schaltungsanordnung. Anstatt der dargestellten Konstellation kann die Kurzschlussschaltung 30 zwischen dem Wechselrichter 1 und dem Transformator 20 verschaltet sein. Auch die Kurzschlussschaltung und das Schaltmittel 22 können in ihrer Position vertauscht sein. Als weitere Möglichkeit kommt in Betracht, ohne den Transformator 20 auszukommen.

Somit kann mit der vorliegenden Erfindung die beschriebene Überspannung wirksam verhindert oder zumindest gering gehalten werden, um Schäden an den entsprechenden Elementen, insbesondere einer verbundenen Solaranlage, zu verhindern. Es werden somit, sobald eine definierte Spannungsgrenze der Phase-Phasenspannung überschritten ist, die betreffenden Phasen gegeneinander für maximal drei Netzperioden durch Thyristoren kurzgeschlossen. Hierzu werden die Thyristoren wie in Fig. 2 gezeigt geschaltet und verwendet. Es kann sich somit keine Überspannung am betreffenden Wechselrichter mehr ausbilden. In dieser Zeit wird der Hauptschalter des Wechselrichters geöffnet und der Wechselrichter ist von den übrigen Wechselrichtern getrennt. Das in Fig. 2 gezeigte Unterbrechungsschaltmittel 22 kann als ein solcher Hauptschalter des Wechselrichters angesehen werden, wenn der Niederspannungstransformator 20 als Teil des Wechselrichters angesehen wird. Nach den maximal drei Netzperioden, in denen der Kurzschluss bestand, wird der Thyristor nicht mehr angesteuert und verlöscht am Ende der betreffenden Netzperiode selbständig. Der Kurzschlussstrom, der durch den Thyristor fließt, wird durch die Netzimpedanz und die Stromregelung der anderen parallelen Wechselrichter begrenzt. Es können hierbei beispielsweise Ströme bis zu 10 kA erwartet werden, die der betreffende Thyristor kurzzeitig führen kann. Der Thyristor wird hierbei nicht zerstört und nach einer Abkühlzeit von mehreren Minuten ist die Sicherheitsschaltung wieder ohne weitere Maßnahme einsatzbereit. Der Wechselrichter kann nach einer Wartezeit und Wiederzuschalten des Mittelspannungsschutzes selbständig wieder an das Netz gehen und somit wieder in das Mittelspannungsnetz einspeisen. Es kann lediglich erforderlich sein, nach einem solchen Fehlerfall lediglich Netzsicherungen zu tauschen.

Die Verwendung von Thyristoren ist besonders bevorzugt, weil diese kurzzeitig kurzschlussfest, robust und vergleichsweise kostengünstig sind und mit sehr einfachen Ansteuerschaltungen betrieben werden können.

Temporäre Überspannungen durch Varistoren über Filterkondensatoren abzubauen ist dabei problematisch, weil Varistoren nur für eine zeitlich sehr begrenzte Zeit eine bestimmte Energiemenge aufnehmen können. Die Varistoren werden dabei heiß. Danach benötigen Varistoren eine längere Abkühlphase. Mit Hilfe der neuen Schutzbeschaltung werden die Überspannung und die damit im Netz befindliche Energie nicht in einem einzelnen Bauelement in Wärme umgesetzt, sondern so umgeleitet, dass sich kein Bauelement alleine stark erwärmt. Die Thyristoren können also thermisch kleiner dimensioniert werden als Varistoren mit dem gleichen Effekt. Zusätzlich zu der Schutzbeschaltung können optional zusätzliche, dafür auch deutlich kleinere Varistoren eingesetzt werden.

Ohne die vorgeschlagene Schutzbeschaltung und die Art und Weise, den Kurzschluss vorzusehen, dürfte es nötig sein, die Filterkondensatoren, die Freilaufdioden der Drosseln, die Zwischenkreiskondensatoren und andere relevante Bauelemente spannungsmäßig etwa dreifach überzudimensionieren.

Um die Filterkondensatoren durch Varistoren alleine zu schützen, müssten diese sehr großzügig dimensioniert werden. Bisher sind keine entsprechend dimensionierten Varistoren bekannt, die einen entsprechenden Schutz der Bauelemente bzw. allgemein gesagt der Zentralwechselrichteranlagen erreichen konnten. Es ist bekannt, dass hierdurch Zentralwechselrichter abgebrannt sind. Varistoren sind nicht abschaltbar, sondern schalten sich selbständig an und aus, wenn die Spannung über ihnen ihren Schwellwert unterschreitet. Das Einschalten geschieht dabei allmählich mit wachsender Spannung. Insgesamt ist es nicht einfach, Varistoren korrekt auf alle möglichen Fehler- und Betriebsfälle zu dimensionieren. Wird eine zu große Energiemenge aufgenommen, werden die Varistoren zerstört und müssen ausgetauscht werden.

Mit Hilfe der erfindungsgemäßen Schutzbeschaltung wird ein Fehlerfall erkannt, die entsprechenden Phasen kurzgeschaltet und das Hauptschütz - wie z. B. das Unterbrechungsschaltmittel 22 - ausgeschaltet.

Würde, um ein Beispiel zu nennen, der Wechselrichter-Hauptschalter - das Hauptschütz bzw. das Unterbrechungsschaltmittel 22 - im Überspannungsfall ohne die Schutzbeschaltung geöffnet werden, kann dieser Schalter durch Überströme zerstört werden. Da die Abschaltung des Hauptschützes ca. 40 ms dauert, wäre der Wechselrichter wahrscheinlich schon zerstört worden.

Bisher ist nur bekannt, auftretende Überspannungen mit den beschriebenen nicht steuerbaren Varistoren abzubauen. Eine Trennung vom Netz erfolgte nicht in der gebotenen Zeit.

Die vorgeschlagene Lösung schafft somit eine Sicherheitsschaltung, die Überspannungen schnell erkennt und darauf schnell reagiert. Der Wechselrichter kann bei einem Überspannungsfall zuverlässig vor der Überspannung geschützt und von dieser getrennt werden. Somit kann der Wechselrichter intakt bleiben. Nach einer vorbestimmbaren Wartezeit kann der Wechselrichter wieder selbständig ans Netz gehen.

Gemäß einer Ausführungsform, die mit den weiteren Ausführungsformen im Grunde beliebig kombinierbar ist, kann die Kurzschlussschaltung als separates Gerät bzw. in einem separaten Gerät vorgesehen sein, das drei Anschlüsse L1, L2 und L3 zum Anschließen an die drei Phasen aufweist, zudem eine Versorgungsspannung von beispielsweise 24 V und einen Freigabesignaleingang um von dem zu schützenden Wechselrichter ein Freigabesignal zu erhalten. Durch dieses Freigabesignal kann die Schutzbeschaltung freigeschaltet bzw. "scharfgeschaltet" werden. Weiterhin kann ein Signalausgang zur Kommunikation mit dem Wechselrichter vorgesehen sein, um den Wechselrichter ggf. abzuschalten und das Hauptschütz des Wechselrichters zu öffnen.

Die Schutzbeschaltung, die auch als Kurzschlussschaltung bezeichnet werden kann, kann für einen einzelnen Wechselrichter oder für eine Gruppe von beispielsweise fünf Wechselrichtern vorgesehen sein. In letzterem Fall sind fünf Wechselrichter aber nur eine Schutzbeschaltung vorgesehen, die wie in Fig. 3 angeordnet sein kann.

Die beschriebenen Schaltmaßnahmen zum Schützen im Falle einer Überspannung werden vorzugsweise mittels einer Kurzschlussschaltung durchgeführt, die Teil eines Wechselrichters oder Teil eines lokalen Stromnetzes sein kann. Vorzugsweise wird die Kurzschlussschaltung als separate Schutzbeschaltung, insbesondere als separates, die Schutzbeschaltung umfassendes Gerät, ausgeführt. Ein solches Gerät kann getrennt von dem Wechselrichter und/oder dem Niederspannungstransformator vorgesehen und ausgeliefert werden und eignet sich somit auch zum Nachrüsten bestehender Anlagen.

## Patentansprüche

1. Sicherheitsschaltung zum Schützen elektronischer Bauelemente (4, 8, 10, 12, 18) vor Überspannung, umfassend:
- einen Transformator (20) mit
- einem Eingang zum Verbinden mit einem einen ersten Wechselstrom mit einer ersten Wechselspannung erzeugenden Wechselrichter (1) und
- einem Ausgang zum Verbinden mit einem lokalen Stromnetz (24, 102) und
- zum Transformieren des durch den Wechselrichter erzeugten und am Eingang des Transformators (20) bereitgestellten ersten Wechselstrom mit einer ersten Wechselspannung in einen zweiten Wechselstrom mit einer zweiten Wechselspannung am Ausgang des Transformators (20) und
- eine Kurzschlussschaltung (30) zum Erzeugen eines vorübergehenden Kurzschlusses in dem lokalen Stromnetz (24, 102), wenn die erste oder zweite Wechselspannung einen vorbestimmten Wert überschreitet,
**dadurch gekennzeichnet dass**,
- der Transformator (20) und das lokale Stromnetz (24, 102) mehrphasig, insbesondere mit drei Phasen ausgeführt sind und die Kurzschlussschaltung (30) dazu vorbereitet ist, einen Kurzschluss zwischen jeder Phase (L1, L2, L3) zu erzeugen, wobei die Kurzschlussschaltung (30) zum Erzeugen des Kurzschlusses dazu vorbereitet ist, die Phasen (L1, L2, L3) gegeneinander kurzzuschließen, und
**gekennzeichnet durch** ein funktional zwischen dem Ausgang des Transformators (20) und der Kurzschlussschaltung (30) angeordnetes Unterbrechungsschaltmittel (22) zum Trennen des lokalen Stromnetzes (24, 102) vom Transformator (20) sowie eine Steuereinheit zum Steuern der Kurzschlussschaltung und zum Steuern des Unterbrechungsschaltmittels (22), wobei die Steuereinheit dazu vorbereitet ist, nach dem Erzeugen des Kurzschlusses das Unterbrechungsschaltmittel (22) zum Trennen des lokalen Stromnetzes (24, 102) zu öffnen und anschließend, bei geöffnetem Unterbrechungsschaltmittel (22) das Erzeugen des Kurzschlusses zu beenden.

2. Sicherheitsschaltung nach Anspruch 1, wobei die Kurzschlussschaltung (30) wenigstens einen steuerbaren Halbleiterschalter (36), insbesondere Thyristor (36) aufweist, vorzugsweise wenigstens zwei antiparallel geschaltete Halbleiterschalter (36), insbesondere Thyristoren (36).

3. Sicherheitsschaltung nach einem der vorstehenden Ansprüche, wobei die Kurzschlussschaltung (30) dazu vorbereitet, insbesondere vorprogrammiert ist, nach einer vorbestimmten Anzahl Perioden des zweiten Wechselstroms, vorzugsweise nach 1 bis 5 Perioden, insbesondere nach 3 Perioden den Kurzschlusszustand wieder zu beenden.

4. Sicherheitsschaltung nach einem der vorstehenden Ansprüche, **gekennzeichnet durch** die Kurzschlussschaltung (30) mit wenigstens einem steuerbaren Halbleiterschalter (36), insbesondere Thyristor (36), vorzugsweise wenigstens zwei antiparallel geschalteten Halbleiterschaltern (36), insbesondere Thyristoren (36), zum Erzeugen des Kurzschlusses,
- wobei die Kurzschlussschaltung (30) dazu vorbereitet ist, einen Kurzschluss in dem lokalen Stromnetz (24, 102) zu erzeugen, wenn die erfasste Spannung des lokalen Stromnetzes (24, 102) oder die erfasste Spannung eines Ausgangs eines verbundenen Wechselrichters dem Betrag nach einen vorbestimmten Wert überschreitet und/oder
- wobei die Kurzschlussschaltung (30) dazu vorbereitet ist, einen Kurzschluss in dem lokalen Stromnetz (24, 102) zu erzeugen, wenn erfasst wurde, dass das lokale Stromnetz (24, 102) von einem Mittelspannungsnetz (106) oder Hochspannungsnetz getrennt wurde.

5. Sicherheitsschaltung nach Anspruch 4, **gekennzeichnet durch** die Kurzschlussschaltung (30), umfassend
- ein Messmittel (34) zum Erfassen der Spannung des lokalen Stromnetzes (24, 102) bzw. der Spannung des Ausgangs des Wechselrichters, und/oder
- ein Erfassungsmittel zum Erfassen, ob das lokale Stromnetz (24, 102) von dem Mittelspannungsnetz (106) getrennt wurde.

6. Sicherheitsschaltung nach Anspruch 4 oder 5, **gekennzeichnet durch** die Kurzschlussschaltung (30), wobei die Kurzschlussschaltung (30) zur Verwendung in einem Netz mit einer Spannung von 250 V bis 20kV, insbesondere 400 V bis 690V, vorzugsweise in einem 400 V Netz (24, 102), insbesondere dreiphasigen Netz, vorbereitet ist und/oder wobei die Kurzschlussschaltung (30) eine Kommunikationsschnittstelle zum Austausch von Daten und/oder Signalen mit einem Wechselrichter (1) aufweist.

7. Wechselrichter (1) zum Erzeugen einer Ausgangswechselspannung an einem Ausgang des Wechselrichters zum Bereitstellen eines elektrischen Wechselstroms in einem lokalen Stromnetz mit einer Netzwechselspannung, umfassend eine Sicherheitsschaltung nach einem der vorstehenden Ansprüche, wobei der Ausgang des Wechselrichters (1) mit dem Eingang des Transformators (20) funktional verbunden ist.

8. Wechselrichter (1) nach Anspruch 7, umfassend eine mit dem Ausgang des Wechselrichters verbundene Filterschaltung mit Filterkondensatoren (18) zum Filtern der Ausgangswechselspannung, wobei zu jedem Filterkondensator (18) wenigstens ein Varistor parallel geschaltet ist.

9. Schaltungsanordnung mit einer Sicherheitsschaltung zum Schützen elektronischer Bauelemente (4, 8, 10, 12, 18) vor Überspannung, umfassend:
- einen Wechselrichter (1) nach Anspruch 7 oder 8 zum Erzeugen eines ersten Wechselstroms mit einer ersten Wechselspannung, und
- dem lokalen Stromnetz (24,102) zum Führen des zweiten Wechselstroms mit der zweiten Wechselspannung.

10. Schaltungsanordnung nach Anspruch 9, **gekennzeichnet durch** wenigstens einen weiteren Wechselrichter (1'), der optional mit dem bzw. einem weiteren Transformator (20') gekoppelt ist, zum Transformieren und Einspeisen elektrischer Energie des weiteren Wechselrichters (1') in das lokale Stromnetz (24, 102).

11. Schaltungsanordnung nach einem der Ansprüche 9 bis 10, wobei das lokale Stromnetz (24, 102) über einen Mittelspannungstransformator (104) mit einem Mittelspannungsnetz (106) oder über einen Hochspannungstransformator mit einem Hochspannungsnetz gekoppelt ist.

12. Photovoltaikanlage mit einer Sicherheitsschaltung nach einem der Ansprüche 1 bis 6, einem Wechselrichter (1) nach Anspruch 7 oder 8 oder einer Schaltungsanordnung nach einem der Ansprüche 10 bis 11.

13. Verfahren zum Betreiben eines mit einem lokalen Stromnetz (24, 102) insbesondere über einen Transformator (20) gekoppelten, einen Wechselspannungsausgang aufweisenden Wechselrichters (1), insbesondere einer Photovoltaikanlage, wobei der Transformator (20) und das lokale Stromnetz (24, 102) mehrphasig, insbesondere mit drei Phasen (L1, L2, L3) ausgeführt sind, umfassend die Schritte:
Messen einer Netzspannung in dem lokalen Stromnetz (24, 102) oder Messen einer Ausgangsspannung an dem Wechselspannungsausgang,
Kurzschließen des lokalen Stromnetzes (24, 102) indem ein Kurzschluss zwischen jeder Phase (L1, L2, L3) erzeugt wird, wobei die Phasen (L1, L2, L3) gegeneinander kurzgeschlossen werden, wenn die Netzspannung bzw. die Ausgangsspannung einen vorbestimmten Wert überschreitet, und/oder wenn eine Verbindung zu einem angeschlossenen Mittelspannungsnetz (106) oder Hochspannungsnetz unterbrochen wird,
wobei
nach dem Kurzschließen des lokalen Stromnetzes (24, 102) eine Verbindung des lokalen Stromnetzes (24, 102) zu dem Transformator (20) und/oder dem Wechselrichterausgang unterbrochen und der Kurzschluss danach beendet wird.

## Claims

1. Safety circuit for protecting electronic components (4, 8, 10, 12, 18) against overvoltage, comprising:
- a transformer (20) having
- an input for connection to an inverter (1) that generates a first AC current with a first AC voltage, and
- an output for connection to a local electricity grid (24, 102) and
- for transforming the first AC current with a first AC voltage generated by the inverter and provided at the input of the transformer (20) into a second AC current with a second AC voltage at the output of the transformer (20), and
- a short-circuiting circuit (30) for generating a temporary short circuit in the local electricity grid (24, 102) if the first or second AC voltage exceeds a predetermined value,
**characterized in that**
- the transformer (20) and the local electricity grid (24, 102) are embodied in a polyphase fashion, in particular with three phases, and the short-circuiting circuit (30) is prepared for generating a short circuit between each phase (L1, L2, L3), wherein the short-circuiting circuit (30) for generating the short circuit is prepared for short-circuiting the phases (L1, L2, L3) relative to one another, and
**characterized by** an interruption switching means (22) arranged functionally between the output of the transformer (20) and the short-circuiting circuit (30) and serving for disconnecting the local electricity grid (24, 102) from the transformer (20) and a control unit for controlling the short-circuiting circuit and for controlling the interruption switching means (22), wherein the control unit is prepared for opening the interruption switching means (22) for disconnecting the local electricity grid (24, 102) after the generation of the short circuit and subsequently for ending the generation of the short circuit with the interruption switching means (22) open.

2. Safety circuit according to Claim 1, wherein the short-circuiting circuit (30) has at least one controllable semiconductor switch (36), in particular thyristor (36), preferably at least two antiparallel-connected semiconductor switches (36) in particular thyristors (36).

3. Safety circuit according to either of the preceding claims, wherein the short-circuiting circuit (30) is prepared, in particular pre-programmed, for ending the short-circuit state again after a predetermined number of periods of the second AC current, preferably after 1 to 5 periods, in particular after 3 periods.

4. Safety circuit according to any of the preceding claims, **characterized by** the short-circuiting circuit (30) having at least one controllable semiconductor switch (36), in particular thyristor (36), preferably at least two antiparallel-connected semiconductor switches (36), in particular thyristors (36), for generating the short circuit,
- wherein the short-circuiting circuit (30) is prepared for generating a short circuit in the local electricity grid (24, 102) if the detected voltage of the local electricity grid (24, 102) or the detected voltage of an output of a connected inverter, in terms of absolute value, exceeds a predetermined value, and/or
- wherein the short-circuiting circuit (30) is prepared for generating a short circuit in the local electricity grid (24, 102) if the situation was detected that the local electricity grid (24, 102) was disconnected from a medium-voltage grid (106) or high-voltage grid.

5. Safety circuit according to Claim 4, **characterized by** the short-circuiting circuit (30), comprising
- a measuring means (34) for detecting the voltage of the local electricity grid (24, 102) or the voltage of the output of the inverter, and/or
- a detection means for detecting whether the local electricity grid (24, 102) was disconnected from the medium-voltage grid (106).

6. Safety circuit according to Claim 4 or 5, **characterized by** the short-circuiting circuit (30), wherein the short-circuiting circuit (30) is prepared for use in a grid having a voltage of 250 V to 20 kV, in particular 400 V to 690 V, preferably in a 400 V grid (24, 102), in particular three-phase grid, and/or wherein the short-circuiting circuit (30) has a communication interface for exchanging data and/or signals with an inverter (1).

7. Inverter (1) for generating an output AC voltage at an output of the inverter for providing an electrical AC current in a local electricity grid with a grid AC voltage, comprising a safety circuit according to any of the preceding claims, wherein the output of the inverter (1) is functionally connected to the input of the transformer (20).

8. Inverter (1) according to Claim 7, comprising a filter circuit having filter capacitors (18) for filtering the output AC voltage, said filter circuit being connected to the output of the inverter, wherein at least one varistor is connected in parallel with each filter capacitor (18).

9. Circuit arrangement having a safety circuit for protecting electronic components (4, 8, 10, 12, 18) against overvoltage, comprising:
- an inverter (1) according to Claim 7 or 8 for generating a first AC current with a first AC voltage, and
- the local electricity grid (24, 102) for carrying the second AC current with the second AC voltage.

10. Circuit arrangement according to Claim 9, **characterized by** at least one further inverter (1'), which is optionally coupled to the and/or a further transformer (20'), for transforming and feeding electrical energy of the further inverter (1') into the local electricity grid (24, 102).

11. Circuit arrangement according to either of Claims 9 and 10, wherein the local electricity grid (24, 102) is coupled to a medium-voltage grid (106) via a medium-voltage transformer (104) or to a high-voltage grid via a high-voltage transformer.

12. Photovoltaic installation having a safety circuit according to any of Claims 1 to 6, an inverter (1) according to Claim 7 or 8 or a circuit arrangement according to either of Claims 10 and 11.

13. Method for the operation of an inverter (1), in particular of a photovoltaic installation, said inverter being coupled to a local electricity grid (24, 102) in particular via a transformer (20) and having an AC voltage output, wherein the transformer (20) and the local electricity grid (24, 102) are embodied in a polyphase fashion, in particular with three phases (L1, L2, L3), comprising the following steps:
Measuring a grid voltage in the local electricity grid (24, 102) or measuring an output voltage at the AC voltage output,
Short-circuiting the local electricity grid (24, 102) by generating a short circuit between each phase (L1, L2, L3), wherein the phases (L1, L2, L3) are shortcircuited relative to one another if the grid voltage or the output voltage exceeds a predetermined value, and/or if a connection to a connected medium-voltage grid (106) or high-voltage grid is interrupted,
wherein
after the short-circuiting of the local electricity grid (24, 102), a connection of the local electricity grid (24, 102) to the transformer (20) and/or the inverter output is interrupted and the short circuit is then ended.

## Revendications

1. Circuit de sécurité destiné à protéger des composants électroniques (4, 8, 10, 12, 18) contre les surtensions, comprenant :
- un transformateur (20) comportant
- une entrée destinée à être connectée à un onduleur (1) générant un premier courant alternatif ayant une première tension alternative et
- une sortie destinée à être connectée à un réseau électrique local (24, 102) et
- destiné à transformer le premier courant alternatif généré par l'onduleur et fourni à l'entrée du transformateur (20) ayant une première tension alternative en un deuxième courant alternatif ayant une deuxième tension alternative à la sortie du transformateur (20), et
- un circuit de court-circuit (30) destiné à générer un court-circuit temporaire dans le réseau électrique local (24, 102) lorsque la première ou la deuxième tension alternative dépasse une valeur prédéterminée, **caractérisé en ce que**
- le transformateur (20) et le réseau électrique local (24, 102) sont réalisés de manière à comporter plusieurs phases, notamment trois phases, et le circuit de court-circuit (30) est conçu pour générer un court-circuit entre chaque phase (L1, L2, L3), dans lequel le circuit de court-circuit (30) est conçu pour générer le court-circuit afin de court-circuiter les unes avec les autres les phases (L1, L2, L3), et
**caractérisé par** un moyen d'interruption (22) disposé de manière fonctionnelle entre la sortie du transformateur (20) et le circuit de court-circuit (30) pour séparer le réseau électrique local (24, 102) du transformateur (20) ainsi qu'une unité de commande destinée à commander le circuit de court-circuit et à commander le moyen d'interruption (22), dans lequel l'unité de commande est conçue, après que le court-circuit a été généré, pour ouvrir le moyen d'interruption (22) afin de séparer le réseau électrique local (24, 102) et après cela, pour interrompre la génération du court-circuit lorsque le moyen d'interruption (22) est ouvert.

2. Circuit de sécurité selon la revendication 1, dans lequel le circuit de court-circuit (30) comprend au moins un commutateur à semi-conducteur pouvant être commandé (36), notamment un thyristor (36), et de préférence au moins deux commutateurs à semi-conducteur connectés en anti-parallèle (36), notamment des thyristors (36).

3. Circuit de sécurité selon l'une quelconque des revendications précédentes, dans lequel le circuit de court-circuit (30) est conçu, et est notamment préprogrammé, pour interrompre l'état de court-circuit après un nombre prédéterminé de périodes du deuxième courant alternatif, de préférence après 1 à 5 périodes, notamment après 3 périodes.

4. Circuit de sécurité selon l'une quelconque des revendications précédentes, **caractérisé en ce que** le circuit de court-circuit (30) comporte au moins un commutateur à semi-conducteur pouvant être commandé (36), notamment un thyristor (36), et de préférence au moins deux commutateurs à semi-conducteur connectés en anti-parallèle (36), notamment des thyristors (36), pour générer le court-circuit,
- dans lequel le circuit de court-circuit (30) est conçu pour générer un court-circuit dans le réseau électrique local (24, 102) lorsque la tension détectée du réseau électrique local (24, 102) ou lorsque la tension détectée d'une sortie d'un onduleur connecté présente un niveau qui dépasse une valeur prédéterminée et/ou
- dans lequel le circuit de court-circuit (30) est conçu pour générer un court-circuit dans le réseau électrique local (24, 102) lorsqu'il a été détecté que le réseau électrique local (24, 102) a été séparé d'un réseau à moyenne tension (106) ou d'un réseau à haute tension.

5. Circuit de sécurité selon la revendication 4, **caractérisé par** le circuit de court-circuit (30), comprenant
- un moyen de mesure (34) destiné à détecter la tension du réseau électrique local (24, 102) ou la tension à la sortie de l'onduleur, et/ou
- un moyen de détection destiné à détecter si le réseau électrique local (24, 102) a été séparé du réseau à moyenne tension (106).

6. Circuit de sécurité selon la revendication 4 ou 5, **caractérisé par** le circuit de court-circuit (30), dans lequel le circuit de court-circuit (30) est conçu pour être utilisé dans un réseau ayant une tension de 250 V à 20 kV, notamment de 400 V à 690 V, de préférence dans un réseau à 400 V (24, 102), notamment dans un réseau triphasé, et/ou dans lequel le circuit de court-circuit (30) comprend une interface de communication destinée à échanger des données et/ou des signaux avec un onduleur (1).

7. Onduleur (1) destiné à générer une tension alternative de sortie à une sortie de l'onduleur pour fournir un courant électrique alternatif dans un réseau électrique local à tension alternative, comprenant un circuit de sécurité selon l'une quelconque des revendications précédentes, dans lequel la sortie de l'onduleur (1) est fonctionnellement connectée à l'entrée du transformateur (20).

8. Onduleur (1) selon la revendication 7, comprenant un circuit de filtrage connecté à la sortie de l'onduleur, comportant des condensateurs de filtrage (18) destinés à filtrer la tension alternative de sortie, dans lequel au moins une résistance est connectée en parallèle à chaque condensateur de filtrage (18).

9. Agencement de circuit comportant un circuit de sécurité destiné à protéger des composants électroniques (4, 8, 10, 12, 18) contre les surtensions, comprenant :
- un onduleur (1) selon la revendication 7 ou 8, destiné à générer un premier courant alternatif ayant une première tension alternative, et
- le réseau électrique local (24, 102) destiné à acheminer le deuxième courant alternatif ayant la deuxième tension alternative.

10. Agencement de circuit selon la revendication 9, **caractérisé par** au moins un autre onduleur (1') qui est facultativement couplé au transformateur ou à un autre transformateur (20') pour transformer et délivrer de l'énergie électrique de l'autre onduleur (1') dans le réseau électrique local (24, 102).

11. Agencement de circuit selon l'une quelconque des revendications 9 à 10, dans lequel le réseau électrique local (24, 102) est couplé par l'intermédiaire d'un transformateur à moyenne tension (104) à un réseau à moyenne tension (106) ou par l'intermédiaire d'un transformateur à haute tension à un réseau à haute tension.

12. Installation photovoltaïque comportant un circuit de sécurité selon l'une quelconque des revendications 1 à 6, un onduleur (1) selon la revendication 7 ou 8, ou un agencement de circuit selon l'une quelconque des revendications 10 à 11.

13. Procédé de mise en fonctionnement d'un onduleur (1) couplé à un réseau électrique local (24, 102), notamment par l'intermédiaire d'un transformateur (20), et comprenant une sortie à tension alternative, notamment d'une installation photovoltaïque, dans lequel le transformateur (20) et le réseau électrique local (24, 102) sont réalisés de manière à comporter plusieurs phases, notamment trois phases (L1, L2, L3), comprenant les étapes consistant à :
mesurer une tension de réseau dans le réseau électrique local (24, 102) ou mesurer une tension de sortie à la sortie à tension alternative,
court-circuiter le réseau électrique local (24, 102) en générant un court-circuit entre chaque phase (L1, L2, L3), dans lequel les phases (L1, L2, L3) sont court-circuitées les unes avec les autres lorsque la tension du réseau ou la tension de sortie dépasse une valeur prédéterminée, et/ou lorsqu'une connexion à un réseau à moyenne tension (106) ou à un réseau à haute tension raccordé est interrompue,
dans lequel, après le court-circuitage du réseau électrique local (24, 102), une connexion du réseau électrique local (24, 102) au transformateur (20) et/ou à la sortie de l'onduleur est interrompue et le court-circuit est ensuite interrompu.
